Europäisches Patentamt

European Patent Office

Office européen des brevets

(19)

(11) **EP 0 715 999 B1**

(12) **EUROPÄISCHE PATENTSCHRIFT**

(45) Veröffentlichungstag und Bekanntmachung des Hinweises auf die Patenterteilung:
**29.04.1998 Patentblatt 1998/18**

(51) Int. Cl.$^6$: **B60T 1/08**, B60T 10/00

(21) Anmeldenummer: **95118212.0**

(22) Anmeldetag: **20.11.1995**

(54) **Verfahren zur Steuerung einer Dauerbremse eines Kraftfahrzeuges**

Method for controlling a retarder of a vehicle

Procédé pour contrôler le ralentisseur d'un véhicule

(84) Benannte Vertragsstaaten:
**FR GB IT NL SE**

(30) Priorität: **09.12.1994 DE 4443814**

(43) Veröffentlichungstag der Anmeldung:
**12.06.1996 Patentblatt 1996/24**

(73) Patentinhaber:
**DAIMLER-BENZ AKTIENGESELLSCHAFT
70567 Stuttgart (DE)**

(72) Erfinder: **Reiner, Michael
D-70736 Fellbach (DE)**

(56) Entgegenhaltungen:
**EP-A- 0 241 872          EP-A- 0 364 682
DE-A- 4 010 551          DE-A- 4 113 376**

• **BOSCH TECHNISCHE BERICHTE, vol.7, no.2, 1980, STUTTGART page 67 - 68**

EP 0 715 999 B1

## Beschreibung

Die Erfindung bezieht sich auf ein Verfahren zur Steuerung einer Dauerbremse eines Kraftfahrzeuges. Derartige Dauerbremsen sind in üblichen Ausführungen als Motorbremsen und/oder Retarder vor allem in Nutzfahrzeugen im Einsatz. In der Regel wirkt die Dauerbremse nur auf eine, nämlich auf die angetriebene Achse. Vor allem für bestimmte Fahrzeuge, für die Dauerbremsen mit hohen Bremswirkungen verlangt werden, erfordert dies dann einen hohen Kraftschluß an den Rädern der dauergebremsten Achse. Bei schlechten Straßenverhältnissen oder nur teilbeladenem Fahrzeug kann deshalb eine Blockierneigung an der dauergebremsten Achse auftreten.

Für Fahrzeuge, die über ein Antiblockiersystem (ABS) mit zugehöriger Raddrehzahlsensorik verfügen, ist es bekannt, bei gemeinsam aktivierter Betriebs- und Dauerbremse die Dauerbremse bei drohendem Blokkieren eines Rades und mit der Aktivierung des ABS abzuschalten. Bei einer in der Auslegeschrift DT 23 22 446 B2 offenbarten Bremsanlage dieser Art ist vorgesehen, die Dauerbremse nach einem derartigen Abschalten dann wieder zu aktivieren, wenn ein an einer bestimmten Stelle im Bremsfluidkreislauf gemessener Bremsdruck unter einen vorgegebenen Schwellenwert abfällt. In der Patentschrift DE 29 31 491 C2 ist eine Dauerbremse offenbart, bei der Blockierschutz-Ansteuersignale eines ABS, welche die einsetzende Blockierneigung eines Rades anzeigen, zum Reduzieren der Wirkung einer aktivierten Dauerbremse auch in dem Fall benutzt werden, in dem die Betriebsbremse nicht aktiv ist. Weiter wird dort vorgeschlagen, anstelle der Blockierschutz-Ansteuersignale einen Regelspeicher wirksam werden zu lassen, der im ABS-Steuergerät die Funktion hat, bestimmte logische Kriterien wirksam werden zu lassen. Er wird beim ersten Empfangen von Ansteuersignalen im ABS-Steuergerät gesetzt und schaltet dann ein Steuergerät der Dauerbremse, wodurch den unterschiedlichen Charakteristiken von Betriebsbremse und Dauerbremse Rechnung getragen werden soll. Bei einer aus der Offenlegungsschrift DE 41 24 496 A1 bekannten Bremsanlage mit ABS und Antriebsschlupfregelung (ASR) wird ein als Dauerbremse wirkendes elektro-regeneratives System für die Dauer von ABS-Regelungsphasen abgeschaltet. In der Offenlegungsschrift DE 42 25 080 A1 ist eine Bremsanlage gezeigt, die eine Kombination eines hydraulischen und eines elektro-regenerativen Bremssystems beinhaltet, welche gemeinsam von einem ABS angesteuert werden können. Das dortige ABS ist daraufhin ausgelegt, bei Panikbremsungen eine Blockierung der Hinterachse zu verhindern und bei Normalbremsungen die Bremswirkung der Hinterachse zu regeln, und zwar in Abhängigkeit von der gewünschten Verzögerung, der Belastung und der vorliegenden Haftung. Prinzipiell wird bei dieser Bremsanlage vorrangig der elektro-regenerative Bremskreis zur Energierückholung ausgenutzt, während der Hydraulikbremskreis nur in bestimmten Fahrsituationen als zusätzlicher Bremsbeitrag aktiviert wird.

In der Patentschrift DD 266 771 A5 ist ein Verfahren zur blockierfreien Betätigung einer zusätzlich zur Betriebsbremse vorgesehenen hydrodynamischen Verzögerungsbremse beschrieben, bei dem kontinuierlich die Winkelgeschwindigkeit der angetriebenen Räder erfaßt und bewertet wird. Tritt an den angetriebenen Rädern übermäßiger Schlupf auf, so wird das Bremsmoment der hydrodynamischen Verzögerungsbremse so lange reduziert, bis die Blockiergefahr abgekungen ist.

In der Offenlegungsschrift DE 38 29 951 A1 ist ein Verfahren zur lastabhängigen Bremsdruckregelung beschrieben, bei der die Bremsdruckverteilung auf die Fahrzeugachsen in Abhängigkeit von Zwischenachs-Raddrehzahlsignalen in einem Radschlupfbereich unterhalb einer einsetzenden Blockierneigung eines Rades und damit vor Aktivierung einer ABS-Regelung selbsttätig geregelt wird. Dabei wird die Bremsdruckverteilung jeweils unverändert belassen, solange der Differenzbetrag der zwischenachsigen Raddrehzahlwerte einen vorgegebenen Grenzwert nicht überschritten hat, während nach einem derartigen Überschreiten die Bremsdruckverteilung in einem diese Überschreitung verringernden Sinne nachgeführt wird. Damit soll eine Regelung der Bremskraftverteilung bereits weit unterhalb der Blockiergrenze erreicht werden, also in einem Bereich, in dem ein übliches ABS noch nicht wirksam ist, z.B. im Bereich zwischenachsiger Drehzahlabweichungen zwischen 1% und 7%.

In der Offenlegungsschrift DE 40 10 551 A1 ist ein Verfahren zur Verbesserung des Bremsverhaltens eines Kraftfahrzeugs beschrieben, bei der ein Blockierzustand an einem mit geringem Kraftschlußbeiwert abrollenden Antriebsrad bei Betätigung einer vorzugsweise als Retarder realisierten Bremseinrichtung, die in Antriebsrichtung einem Differentialgetriebe einer angetriebenen Radachse vorgeschaltet ist, verhindert werden soll. Zu diesem Zweck wird die Drehzahldifferenz zwischen den Drehzahlen des linken und des rechten Rades dieser von der Bremseinrichtung beinflußten Fahrzeugachse erfaßt und mit einem vorgegebenen Schwellenwert verglichen. Liegt der Betrag der Drehzahldifferenz über dem Schwellenwert, so wird die Ausgleichsbewegung des Differentials reduziert oder gesperrt. Maßnahmen gegen ein beidseitiges Überbremsen der dauergebremsten Achse sind nicht getroffen.

Der Erfindung liegt als technisches Problem die Bereitstellung eines Verfahrens der eingangs genannten Art zugrunde, durch das von der Wirkung der Dauerbremse verursachte Blockierzustände der Fahrzeugräder zuverlässig vermieden werden.

Dieses Problem wird durch ein Verfahren mit den Merkmalen des Anspruchs 1 gelöst. Bei diesem Verfahren erfolgt eines Reduzierung der Bremswirkung der aktivierten Dauerbremse bereits vor einsetzender Blockierneigung eines der von der Dauerbremse beaufschlagbaren Räder, indem diese Reduzierung bereits dann erfolgt, wenn der Differenzbetrag zwischenachsiger Raddrehzahlwerte einen vorgegebenen Grenzwert überschreitet, der kleiner als der zwischenachsige Raddrehzahldifferenzbetrag bei einsetzender Blockierneigung eines der Räder ist. Durch diese somit frühzeitig mögliche Reduzierung der Bremswirkung der Dauerbremse besteht im Gegensatz zu herkömmlichen Systemen, bei denen die Abschaltung der Dauerbremse erst mit einem eine Blockierneigung anzeigenden ABS-Signal erfolgt, nicht die Gefahr eines aufgrund des vergleichsweise trägen Bremsmomentabbaus der Dauerbremse zu späten Abschaltens derselben. Eine Blockierung von Rädern aufgrund der Bremswirkung der Dauerbremse läßt sich auf diese Weise verhindern. Einem Ausbrechen der dauergebremsten Achse mit der damit verbundenen Schleudergefahr wird durch diese Vorgehensweise sowohl bei Solofahrzeugen als auch vor allem bei Last- und Sattelzügen zuverlässig entgegengewirkt. Durch die Ausnutzung der Raddrehzahldifferenzinformationen ist keine Sensierung von Bremskräften oder von Absolutwerten des Kraftschlußbeiwertes oder des Radschlupfes erforderlich.

Durch die nach Anspruch 2 vorgesehene Vorgabe eines geschwindigkeitsabhängigen Grenzwertes für den Raddrehzahldifferenzbetrag wird eine bei kleineren Fahrzeuggeschwindigkeiten mögliche höhere Kraftschlußausnutzung für die Wirkung der Dauerbremse erreicht. Analog wird durch eine Ausgestaltung nach Anspruch 3 eine optimale Anpassung des Einsatzzeitpunktes für die Reduzierung der Wirkung der aktivierten Dauerbremse in Abhängigkeit vom Abbremsungswunsch für die Betriebsbremse ermöglicht. Unter monoton fallender Abhängigkeit wird dabei ein stückweise konstanter oder fallender Verlauf verstanden.

Durch die nach Anspruch 4 vorgesehene Abhängigkeit des Maßes der Reduzierung der Dauerbremswirkung vom Gradienten des zeitlich ansteigenden Raddrehzahldifferenzbetrages läßt sich die Reduzierung günstig an den jeweiligen Verlauf eines Bremsvorgangs anpassen, und die Dauerbremse kann vergleichsweise schnell auf einen passenden Wert neu eingestellt werden.

Vorteilhaft kann gemäß Anspruch 5 eine zyklische Verfahrensdurchführung vorgesehen sein, bei der in jedem Zyklus der zwischenachsige Raddrehzahldifferenzbetrag überwacht und die Bremswirkung der Dauerbremse stufenweise in jedem Zyklus zurückgenommen wird, solange der zwischenachsige Raddrehzahldifferenzbetrag größer als der jeweilige Grenzwert ist.

In Weiterbildung der Erfindung nach Anspruch 6 wird während eines Bremsvorgangs nach einer vorangegangenen Reduzierung der Dauerbremswirkung letztere wieder angehoben, wenn der zwischenachsige Raddrehzahldifferenzbetrag um einen vorgebbaren Wert unter den Grenzwert fällt, wodurch es ermöglicht wird, einen für jeden Beladungs- und Straßenzustand höchstmöglichen Dauerbremsanteil wirksam aufrechtzuerhalten.

Eine bevorzugte Ausführungsform der Erfindung ist in den Zeichnungen dargestellt und wird nachfolgend beschrieben. Hierbei zeigen:

Fig. 1    einen Programmablaufplan eines Verfahrens zur Steuerung einer Dauerbremse und

Fig. 2    eine graphische Darstellung von Kennlinien des für die Reduzierung der Dauerbremswirkung maßgeblichen Grenzwertes für den Wert eines zwischenachsigen Raddrehzahldifferenzbetrages in Abhängigkeit vom Abbremsungswunsch für die Betriebsbremse und von der Fahrzeuggeschwindigkeit.

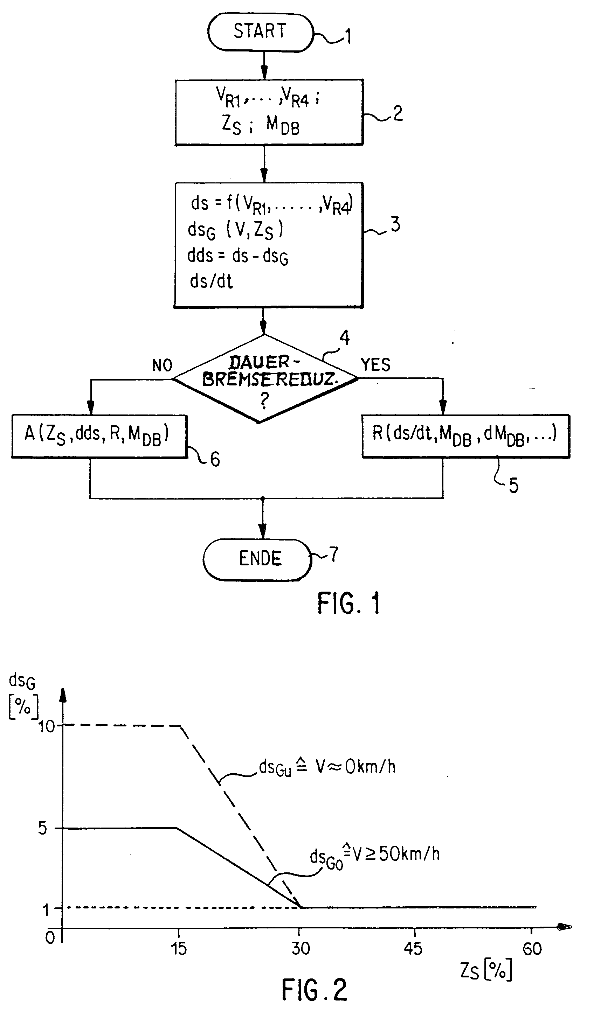

Der Programmablaufplan von Fig. 1 veranschaulicht denjenigen Teil des Verfahrensablaufs zur Steuerung einer Dauerbremse, z.B. einer Motorbremse oder eines Retarders eines Nutzfahrzeuges, der sich auf die Vermeidung des Blockierens eines Rades aufgrund zu hoher Dauerbremswirkung bezieht. Weitere Steuerungsprogramme für die Dauerbremse sind herkömmlicher Natur und bedürfen daher keiner weiteren Erläuterung. Das Verfahren nach Fig. 1 ist in einer dem Fachmann geläufigen Weise in der Bremsensteuerung des Kraftfahrzeuges implementiert und wird von dieser in Zyklen gemäß Fig. 1 durchgeführt. Typische Zykluszeiten liegen zwischen etwa 10ms bis 30ms. Es sei in diesem Beispiel ohne Beschränkung der Allgemeinheit angenommen, daß die Dauerbremse auf die Räder einer angetriebenen Hinterachse einwirkt, während die Räder einer Vorderachse des Kraftfahrzeuges nicht der Einwirkung der Dauerbremse unterliegen.

Nach dem Startschritt (1) beginnt ein solcher Zyklus im nächsten Schritt (2) mit der Feststellung der erforderlichen Eingangsgrößen. Hierzu gehören die vom Fahrer gewünschte und von ihm direkt angeforderte oder vom System berechnete Bremswirkung ($M_{DB}$) der Dauerbremse, die vom Fahrer angeforderte Bremswirkung ($z_s$) der Betriebsbremse sowie die Raddrehzahlen bzw. damit gleichbedeutend die sogenannten Radgeschwindigkeiten ($v_{R1}$ bis $v_{R4}$) der Räder der dauergebremsten Achse einerseits und der Räder der nicht von der Dauerbremse beeinflußten Achse.

Im nächsten Schritt (3) werden die Werte der für eine eventuelle Reduzierung der Dauerbremswirkung maßgeblichen Größen bestimmt, und zwar der momentane Differenzbetrag (ds) zwischen einem zur dauergebremsten Hinterachse gehörigen Raddrehzahlwert und einem zur nicht dauergebremsten Vorderachse gehörigen Raddrehzahlwert, der zeitliche Gradient (ds/dt) dieses Raddrehzahldifferenzbetrages (ds) sowie der sich für die momentane Fahrsituation ergebende Wert eines Grenzwertes ($ds_G$), bei dessen Überschreiten durch den Raddrehzahldifferenzbetrag (ds) eine Reduzierung der Dauerbremswirkung vorgenommen wird. Der Raddrehzahldifferenzbetrag (ds) wird dabei über eine vorgegebene Funktion ($ds=f(v_{R1}, ..., v_{R4})$) berechnet, wie dies in der oben zitierten Patentschrift DE 38 29 951 C2 beschrieben ist, worauf hier Bezug genommen wird. Insbesondere werden hierfür die gemessenen Radgeschwindigkeiten ($v_{R1}$ bis $v_{R4}$) in geeigneter Weise gefiltert und aufbereitet, wobei diese Aufbereitung einen Raddrehzahlabgleich beinhalten kann, um Raddrehzahlunterschiede, die nicht radschlupfbedingt sind, sondern z.B. auf Kurvenfahrten, verschiedenen Raddurchmessern und dergleichen beruhen, herauszumitteln. Mit diesen aufbereiteten Raddrehzahlen kann dann der hier benötigte Raddrehzahldifferenzbetrag (ds) z.B. als Betrag der Differenz zwischen dem Mittelwert der Hinterachsdrehzahlen und dem Mittelwert der Vorderachsdrehzahlen gebildet werden. Anschließend wird, mit Ausnahme des jeweils ersten Zyklus einer neuen Betriebsphase, der zeitliche Gradient (ds/dt) des Raddrehzahldifferenzbetrages (ds) durch entsprechende Differenzenbildung mit dem Betragswert des vorangegangenen Zyklus und Division durch die Zykluszeit ermittelt.

Zur Bestimmung des momentan maßgeblichen Grenzwertes ($ds_G$) für den Raddrehzahldifferenzbetrag (ds) ist in der Bremsensteuerung ein Kennfeld des Grenzwertes ($ds_G$) in Abhängigkeit von der angeforderten Bremswirkung ($z_s$) für die Betriebsbremse und von der Fahrzeuggeschwindigkeib (v) vorgegeben.Die Fahrzeuggeschwindigkeit wird vorzugsweise aus den gemessenen Raddrehzahlen ermittelt oder alternativ anderweitig erfaßt. Eine mögliche Realisierung für das Grenzwert-Kennfeld ist in Fig. 2 dargestellt, wobei auf der Abszisse die Betriebsbremsen-Sollabbremsung ($z_s$) in Prozent der maximalen Bremswirkung und auf der Ordinate der Grenzwert ($ds_G$) des Raddrehzahldifferenzbetrages (ds) in Prozent eines gemittelten Raddrehzahlwertes, z.B. der aufbereitete Drehzahlmittelwert der beiden Vorderachsräder, abgetragen sind.

Die durchgezogene Grenzwertkurve ($ds_{Go}$) stellt den Verlauf des vorzugebenden Grenzwertes ($ds_G$) in Abhängigkeit von der Betriebsbremsen-Sollabbremsung ($z_s$) bei Fahrzeuggeschwindigkeiten (v) größer gleich 50km/h dar. Die gestrichelte Kurve ($ds_{Gu}$) zeigt analog den Verlauf des vorzugebenden Grenzwertes ($ds_G$) bei Fahrzeuggeschwindigkeiten (v) nahe 0km/h. Beide Kurven verlaufen oberhalb einer Betriebsbremsen-Sollabbremsung ($z_s$) von größer gleich 30% auf einer horizontalen Linie, durch die der Grenzwert ($ds_G$) auf den Wert 1% gesetzt wird. Dies bewirkt, daß der Grenzwert ($ds_G$) bei höheren Bremsanforderungen auf den für Betriebsbremsen geforderten Bereich des Raddrehzahldifferenzbetrages (ds) als Maß für den zwischenachsigen Radschlupfunterschied von etwa 1% bis 2% eingestellt bleibt. Bei Betriebsbremsen-Sollabbremsungen ($z_s$) unterhalb von 30% wird gemäß Fig. 2 hingegen ein größeres Maß an zwischenachsiger Radschlupfdifferenz, d.h. ein größerer Grenzwert ($ds_G$) für den Raddrehzahldifferenzbetrag (ds) zugestanden. Weiterhin kann in diesem Bereich fehlender oder geringer Betriebsbremsen-Sollabbremsung ($z_s$) für kleinere Fahrzeuggeschwindigkeiten (v) eine höhere Kraftschlußausnutzung durch die Dauerbremse ohne Sicherheitseinbußen erlaubt werden. Entsprechend ist im Beispiel von Fig. 2 zwischen Betriebsbremsen-Sollabbremsungswerten ($z_s$) zwischen 0% und 15% ein konstanter, horizontaler Grenzwertverlauf in Abhängigkeit von der Betriebsbremsen-Sollabbremsung ($z_s$) vorgesehen, wobei der Grenzwert ($ds_G$) bei Fahrzeuggeschwindigkeiten (v) nahe 0km/h auf 10% und bei Fahrzeuggeschwindigkeiten (v) größer gleich 50km/h auf 5% gesetzt ist. Für die dazwischenliegenden Fahrzeuggeschwindigkeitswerte (v) enthält das Kennfeld interpolierte Werte für den Grenzwert ($ds_G$). Im Bereich von Werten für die Betriebsbremsen-Sollabbremsung ($z_s$) zwischen 15% und 30% interpoliert das Kennfeld von Fig. 2 für den Grenzwert ($ds_G$) linear in Abhängigkeit von der Betriebsbremsen-Sollabbremsung ($z_s$). Es versteht sich, daß je nach Bedarf modifizierte Kennfelder für den Grenzwert ($ds_G$) vorgegeben werden können, die eine monoton fallende Abhängigkeit von der Betriebsbremsen-Sollabbremsung ($z_s$), d.h. mit steigender Sollabbremsung ($z_s$) konstant bleibendem oder fallendem Verlauf, und ebenso einen monoton fallenden Verlauf in Abhängigkeit von der Fahrzeuggeschwindigkeit (v) aufweisen, d.h. mit steigender Geschwindigkeit konstantem oder fallendem Grenzwert ($ds_G$).

Als letzte Maßnahme dieses Schrittes (3) wird die Differenz ($dds=ds-ds_G$) zwischen dem momentanen Raddrehzahldifferenzbetrag (ds) und dem für ihn momentan gültigen Grenzwert ($ds_G$) gebildet. In einem anschließenden Abfrageschritt (4) wird nun geprüft, ob eine Rückstufung der Dauerbremse vorzunehmen ist. Primäres Kriterium hierfür ist das Überschreiten des Grenzwertes ($ds_G$) durch den Raddrehzahldifferenzbetrag (ds), d.h. ein positiver Wert der im vorigen Schritt (3) bestimmten Differenz (dds) zwischen dem Raddrehzahldifferenzbetrag (ds) und dem Grenzwert ($ds_G$). Ergänzend kann vorgesehen sein, diese Differenz (dds), die das Maß der Abweichung des Raddrehzahldifferenzbetrages (ds) vom Grenzwert ($ds_G$) angibt, in einem jeweiligen Verfahrenszyklus als auslösenden Faktor für eine weitere Rücknahme der Dauerbremse variabel zu wählen, speziell in Abhängigkeit von der erstmaligen oder einer wiederholten Rückstufung der Dauerbremswirkung und unter Berücksichtigung der für den vergleichsweise trägen Bremsmomentabbau in der Dauerbremse zweckmäßen Wartezeit.

Ergibt die Abfrage in diesem Schritt (4), daß die Bremswirkung der Dauerbremse zu reduzieren ist, wird in einem anschließenden Schritt (5) das Maß der Rückstufung (R) der Dauerbremse ermittelt, und zwar als Funktion des zuvor im Schritt (3) bestimmten zeitlichen Gradienten (ds/dt) des Raddrehzahldifferenzbetrages (ds) und/oder der eingestellten Höhe der fahrerangeforderten Dauerbremswirkung ($M_{DB}$). Je nach Anwendungsfall kann die Rückstufung stufenlos oder gestuft um eine oder mehrere Stufen gleichzeitig oder gemäß fest vorgegebener und ggf. adaptiv erlernbarer Rückstufungsfaktoren nach Erfahrungswerten erfolgen. Als Spezialfall kann insbesondere vorgesehen sein, die Dauerbremse ganz abzuschalten, wenn bei der laufenden Überprüfung des Raddrehzahldifferenzbetrages (ds) festgestellt wird, daß selbst nach Ablauf der zum Bremsmomentabbau der Dauerbremse notwendigen Wartezeit von ca. 0,5s bis 1,5s der Grenzwert ($ds_G$) noch immer um ein Inkrement von z.B. 0,5% bis 1% überschritten wird. Über die Bremsensteuerung wird die Bremswirkung der Dauerbremse anschließend um das ermittelte Rückstufungsmaß (R) zurückgenommen. Daraufhin ist das Ende (7) eines Verfahrenszyklus erreicht, und es beginnt ein neuer Zyklus, solange die Bremsensteuerung aktiv ist.

Wenn im Abfrageschritt (4) erkannt wurde, daß der Raddrehzahldifferenzbetrag (ds) unter dem Grenzwert ($ds_G$) liegt, die Bremswirkung der Dauerbremse also nicht zu stark ist und folglich nicht zurückgenommen werden braucht, setzt das Verfahren anschließend mit einem Anhebungsschritt (6) fort. In diesem Schritt (6) wird, falls bestimmte, abgefragte Bedingungen erfüllt sind, die Bremswirkung der Dauerbremse wieder um einen vorgegebenen Wert (A) angehoben. Die Bedingungen, die hierzu erfüllt sein müssen, bestehen darin, daß eine Überlagerung mit der Betriebsbremse beendet ist, daß der Raddrehzahldifferenzbetrag (ds) um mehr als einen vorgebbaren Wert unter den momentan gültigen Grenzwert ($ds_G$) gefallen ist, daß das Maß vorangegangener Rückstufungen nicht über einem vorwählbaren Wert lag und daß noch eine Fahreranforderung zum Einsatz der Dauerbremse besteht. Wenn diese Bedingungen vorliegen, hebt die Bremsensteuerung die Bremswirkung der Dauerbremse um das vorwählbare Inkrement (A) an, wonach der Verfahrenszyklus für diesen Fall beendet ist und zum Taktende (7) weitergegangen wird. Sind die im Schritt (6) abgefragten Bedingungen für eine Wiederanhebung der Bremswirkung der Dauerbremse nicht, erfüllt, geht das Verfahren direkt zum Taktende (7) weiter, ohne eine solche Wiederanhebung der Dauerbremswirkung vorzunehmen.

Aus der obigen Beschreibung eines Verfahrenszyklus wird die Funktionsweise der verfahrensgemäß adhäsionsüberwachten Dauerbremse deutlich. Sobald die mittels des Raddrehzahldifferenzbetrages erfaßte Bremswirkung der Dauerbremse ein jeweils durch den Grenzwert für den Raddrehzahldifferenzbetrag vorgebenes Maß überschreitet, wird die Dauerbremswirkung durch die Bremsensteuerungselektronik auf ein adhäsionsunkritisches Maß zurückgenommen. Dabei setzt diese Rücknahme bereits weit unterhalb der Radblockiergrenze und somit deutlich früher als bei den herkömmlichen Systemen ein, bei denen die Dauerbremse erst bei Aktivierung des ABS abgeschaltet wird. Wird im Verlauf eines Bremsvorgangs der Abbremsungswunsch mit der Betriebsbremse vom Fahrer wieder reduziert, ermöglicht das Verfahren eine Zuschaltung von zuvor zurückgenommenen Dauerbremsanteilen, wenn hierzu einzuhaltende Bedingungen vorliegen. Damit kann in vorteilhafter Weise immer eine möglichst hohe, aber dennoch unkritische Dauerbremswirkung erzielt werden.

## Patentansprüche

1. Verfahren zur Steuerung einer Dauerbremse eines Kraftfahrzeuges,
   **dadurch gekennzeichnet, daß**
   die Bremswirkung der Dauerbremse in Abhängigkeit vom Betrag (ds) der Differenz zwischen einem aus den Drehzahlen eines oder mehrerer, von der Dauerbremse beeinflußbarer Räder abgeleiteten Raddrehzahlwert und einem aus den Drehzahlen eines oder mehrerer, nicht von der Dauerbremse beeinflußbarer Räder abgeleiteten Raddrehzahlwert eingestellt wird, wobei die Bremswirkung bereits vor einsetzender Blockierneigung eines der Räder reduziert wird, wenn der Raddrehzahldifferenzbetrag einen geeignet vorgegebenen Grenzwert ($ds_G$) überschreitet.

2. Verfahren nach Anspruch 1, weiter
   **dadurch gekennzeichnet, daß**
   der Grenzwert ($ds_G$) als in Abhängigkeit von der Fahrzeuggeschwindigkeit (v) monoton fallende Funktion vorgegeben wird.

3. Verfahren nach Anspruch 1 oder 2, weiter
   **dadurch gekennzeichnet, daß**
   der Grenzwert ($ds_G$) als in Abhängigkeit vom Sollabbremsungswert ($z_s$) für die Betriebsbremse des Fahrzeugs monoton fallende Funktion vorgegeben wird.

4. Verfahren nach einem der Ansprüche 1 bis 3, weiter
   **dadurch gekennzeichnet, daß**
   das Maß der Reduzierung der Bremswirkung der Dauerbremse abhängig vom zeitlichen Gradient (ds/dt) des Raddrehzahldifferenzbetrages (ds) festgelegt wird, wobei das Maß der Reduzierung mit steigendem Gradient ansteigt.

5. Verfahren nach einem der Ansprüche 1 bis 4, weiter
   **dadurch gekennzeichnet, daß**
   der Raddrehzahldifferenzbetrag (ds) zyklisch überwacht und die Bremswirkung der Dauerbremse stufenweise in jedem Zyklus reduziert wird, solange der Raddrehzahldifferenzbetrag größer als der vorgegebene Grenzwert ($ds_G$) ist.

6. Verfahren nach einem der Ansprüche 1 bis 5, weiter **dadurch gekennzeichnet, daß** die Bremswirkung der Dauerbremse während eines Bremsvorgangs nach vorangegangener Reduzierung wieder angehoben wird, wenn der Raddrehzahldifferenzbetrag ($ds$) um einen vorgebbaren Wert unter den Grenzwert ($ds_G$) fällt.

## Claims

1. Method for controlling a retarder brake of a motor vehicle, characterized in that the braking effect of the retarder brake is set as a function of the absolute value ($ds$) of the difference between a wheel speed value which is derived from the wheel speeds of one or more wheels which can be influenced by the retarder brake and a wheel speed value which is derived from the wheel speeds of one or more wheels which cannot be influenced by the retarder brake, the braking effect being reduced even before one of the wheels starts to tend to lock if the absolute value of the difference between the wheel speeds exceeds a suitably prescribed limit value ($ds_G$.)

2. Method according to Claim 1, further characterized in that the limit value ($ds_G$) is prescribed as a function which decreases monotonously in dependence on the speed ($v$) of the vehicle.

3. Method according to Claim 1 or 2, further characterized in that the limit value ($ds_G$) is prescribed as a function which decreases monotonously in dependence on the desired braking value ($z_s$) for the service brake of the vehicle.

4. Method according to one of Claims 1 to 3, further characterized in that the magnitude of the reduction of the braking effect of the retarder brake is determined as a function of the time gradient ($ds/dt$) of the absolute value ($ds$) of the difference between the wheel speeds, the magnitude of the reduction increasing as the gradient rises.

5. Method according to one of Claims 1 to 4, further characterized in that the absolute value ($ds$) of the difference between the wheel speeds is monitored cyclically and the braking effect of the retarder brake is reduced incrementally in each cycle as long as the absolute value of the difference between the wheel speeds is larger than the prescribed limit value ($ds_G$).

6. Method according to one of Claims 1 to 5, further characterized in that the braking effect of the retarder brake is raised again during a braking process after preceding reduction if the absolute value ($ds$) of the difference between the wheel speeds drops by a prescribable value below the limit value ($ds_G$).

## Revendications

1. Procédé pour commander un frein continu dans un véhicule automobile, caractérisé en ce que l'action de freinage du frein continu est réglée en fonction de la valeur absolue ($ds$) de la différence entre une valeur de la vitesse de rotation de roue,dérivée des vitesses de rotation d'une ou de plusieurs roues pouvant être influencées par le frein continu, et une valeur de vitesse de rotation de roue dérivée des vitesses de rotation d'une ou de plusieurs roues ne pouvant pas être influencées par le frein continu, l'action de freinage étant réduite déjà avant qu'apparaisse une tendance du blocage de l'une des roues, lorsque la valeur absolue de la différence entre les vitesses de rotation de roues dépasse une valeur limite ($ds_G$) déterminée de façon appropriée.

2. Procédé selon la revendication 1, caractérisé en outre en ce que la valeur limite ($ds_G$) est prédéterminée sous la forme d'une fonction qui décroît de façon monotone en fonction de la vitesse ($v$) du véhicule.

3. Procédé selon la revendication 1 ou 2, caractérisé en outre en ce que la valeur limite ($ds_G$) est prédéterminée en tant que fonction qui décroît de façon monotone en fonction de la valeur de freinage de consigne ($z_s$) pour le frein de service du véhicule.

4. Procédé selon l'une des revendications 1 à 3, caractérisé en outre en ce que le degré de réduction de l'action de freinage du frein continu est fixé en fonction du gradient temporel ($ds/dt$) de la valeur absolue ($ds$) de la différence entre les vitesses de rotation de roues, le degré de réduction augmentant lorsque le gradient augmente.

5. Procédé selon l'une des revendications 1 à 4, caractérisé en outre en ce que la valeur absolue ($ds$) de la différence entre les vitesses de rotation de roues est contrôlée cycliquement et que l'action de freinage du frein continu est réduite d'une manière échelonnée pendant chaque cycle, tant que la valeur absolue de la différence entre les vitesses de rotation de roues est supérieure à la valeur limite prédéterminée ($ds_G$).

6. Procédé selon l'une des revendications 1 à 5, caractérisé en outre en ce que l'action de freinage du frein continu pendant un processus de freinage est à nouveau supprimée après une réduction précédente lorsque la valeur absolue (des) de la différence des vitesses de rotation tombe au-dessous de la valeur limite ($ds_G$), et ce d'une valeur pouvant être prédéterminée.

FIG. 1

FIG. 2